# EUROPÄISCHE PATENTSCHRIFT

(11) **EP 3 935 930 B1**
(45) Veröffentlichungstag und Bekanntmachung des Hinweises auf die Patenterteilung: **12.04.2023**
(21) Anmeldenummer: 20185277.9
(22) Anmeldetag: 10.07.2020
(51) Int. Cl.: A01B 59/041

(54) **LAGERANORDNUNG FÜR EINEN SEITENSTABILISATOR EINES HECK-KRAFTHEBERS**
BEARING ASSEMBLY FOR A SIDE STABILISER OF A REAR POWER LIFT
AGENCEMENT DE PALIER POUR UN STABILISATEUR LATÉRAL D'UN RELEVAGE ARRIÈRE

(43) Veröffentlichungstag der Anmeldung: 12.01.2022
(73) Patentinhaber: Deere & Company, Moline, IL 61265 (US)
(72) Erfinder: Hildebrand, Sven, 68163 Mannheim (DE); Heitlinger, Martin, 68163 Mannheim (DE)
(74) Vertreter: Dehnhardt, Florian Christopher

(56) Entgegenhaltungen:
- EP-A1- 1 745 685
- EP-A1- 2 870 845
- EP-B1- 1 745 685
- DE-A1-102015 009 889

## Beschreibung

Die Erfindung betrifft eine Anordnung zur Lagerung eines Seitenstabilisators eines Heck-Krafthebers, der für ein landwirtschaftliches Nutzfahrzeug verwendet wird.

Derartige Lageranordnungen enthalten ein Achsgehäuse für eine Hinterachse des Nutzfahrzeugs und eine mit dem Achsgehäuse verbundene Lagerkonsole zur beweglichen Lagerung des Seitenstabilisators. Die mechanische Verbindung zwischen dem Achsgehäuse und der Lagerkonsole wird oftmals mittels geeigneter Spannmittel realisiert. Die Dokumente EP 1 745 685 A1, EP 2 870 845 A1 und DE 10 2015 009889 A1 beschreiben bekannte Anordnungen mit einer Lagerkonsole zur Lagerung eines Seitenstabilisators eines Heck-Krafthebers.

Der vorliegenden Erfindung liegt die Aufgabe zugrunde, eine Lageranordnung für einen Seitenstabilisator eines Heck-Krafthebers hinsichtlich ihrer mechanischen Eigenschaften zu verbessern.

Diese Aufgabe wird durch eine Anordnung mit den Merkmalen des Patentanspruchs 1 gelöst.

Weitere vorteilhafte Ausgestaltungen der erfindungsgemäßen Anordnung gehen aus den Unteransprüchen hervor.

Gemäß Patentanspruch 1 enthält die Lageranordnung eine Lagerkonsole zur Lagerung eines Seitenstabilisators. Dieser Seitenstabilisator bewirkt in Betriebseinbaulage der Lageranordnung an einem landwirtschaftlichen Nutzfahrzeug eine mechanische Kopplung der Lagerkonsole mit einem Heck-Kraftheber. Außerdem enthält die Lageranordnung ein eine Mittellängsachse aufweisendes Achsgehäuse für eine Hinterachse des Nutzfahrzeugs. Die Lagerkonsole weist eine Lagerstelle zur beweglichen Lagerung des Seitenstabilisators auf. Die Lagerkonsole ist durch eine Spannkraft mit dem Achsgehäuse mechanisch verbunden. Dabei ist die Spannkraft derart ausgerichtet, dass diese parallel zu einer Zugkraft verläuft, welche an der Lagerstelle in Betriebseinbaulage wirkt. Während die Spannkraft relativ zur Lageranordnung unverändert ausgerichtet ist, kann die Zugkraft an der Lagerstelle in unterschiedlichen Richtungen angreifen. Zumindest jedoch in einer Angriffsrichtung der Zugkraft an der Lagerstelle, d.h. in mindestens einer Lagerposition des Seitenstabilisators in Betriebseinbaulage, ist die Spannkraft parallel zur Zugkraft ausgerichtet. Bei anderen Angriffsrichtungen der Zugkraft an der Lagerstelle, d.h. bei anderen Lagerpositionen des Seitenstabilisators, kann die Spannkraft nicht-parallel zu der Zugkraft ausgerichtet sein.

Mit dieser Ausrichtung der Spannkraft werden Richtungsabweichungen zwischen der Spannkraft und der an dem Seitenstabilisator in Betriebseinbaulage angreifenden Kraft signifikant begrenzt. Die eingesetzten Spannmittel können deshalb in einem deutlich größeren Maße in Richtung der Zugkraft des Seitenstabilisators belastet werden. Dies unterstützt eine kostengünstige kleine Dimensionierung der notwendigen Spannkräfte und/oder eine reduzierte Anzahl der eingesetzten Spannmittel, um dennoch eine ausreichend stabile mechanische Verbindung zwischen dem Achsgehäuse und der Lagerkonsole zu erreichen.

Die spezifische Ausrichtung der Spannkraft schafft die Voraussetzung für ein besonders effizientes Verhältnis zwischen Zugkräften des Seitenstabilisators und Verbindungskräften, welche eine mechanische Verbindung zwischen dem Achsgehäuse und der Lagerkonsole bewirken. Die notwendigen Verbindungskräfte (z.B. Spannkräfte mittels geeigneter Verbindungsmittel) können signifikant reduziert werden. Zudem werden unerwünschte Reibungskräfte zwischen dem Achsgehäuse und der Lagerkonsole reduziert, welche im Betrieb des Seitenstabilisators induziert werden können. Die geringere mechanische Beanspruchung zwischen dem Achsgehäuse und der Lagerkonsole ermöglicht auch eine kleinere und somit kosten- sowie raumsparende Dimensionierung der Lagerkonsole. Ebenso können auch ggf. eingesetzte mechanische Verbindungsmittel (z.B. Spannbolzen, Spannschrauben) zwischen dem Achsgehäuse und der Lagerkonsole kleiner und folglich kosten- sowie raumsparend dimensioniert werden.

Die Ausrichtung der Spannkraft bezüglich der an der Lagerstelle angreifenden Zugkraft ermöglicht außerdem eine aneinandergereihte Anordnung des Achsgehäuses und der Lagerkonsole etwa entlang der Fahrzeug-Längsrichtung. Dies erlaubt eine größere Bodenfreiheit des Nutzfahrzeugs im Bereich seiner Hinterachse und eine besonders montagefreundliche Handhabung der Lagerkonsole bei dem Zusammenbau der Lageranordnung und des Nutzfahrzeugs.

Die bewegliche Lagerung des Seitenstabilisators an der Lagerstelle der Lagerkonsole ist beispielsweise als eine drehbewegliche Lagerung um eine Drehachse ausgebildet. Diese Drehachse kann etwa horizontal und dabei in einem spitzen Winkel zur Mittellängsachse des Achsgehäuses verlaufen. Alternativ kann an der Lagerstelle ein Kugelgelenk vorgesehen sein, welches eine Beweglichkeit des Seitenstabilisators in mehrere Richtungen erlaubt, insbesondere auch eine laterale Bewegung etwa entlang einer Fahrzeug-Querrichtung, welche parallel zur Hinterachse verläuft.

Die Lagerkonsole kann aus unterschiedlichen Werkstoffen und unterschiedlichen Herstellungsverfahren gefertigt werden. Insbesondere ist sie aus einem metallischen Werkstoff oder einer metallischen Legierung als ein Schmiedeteil, Schweißteil oder Gussteil gefertigt.

Die parallele Ausrichtung der Spannkraft und der Zugkraft ist vorzugsweise bezüglich einer Querebene vorgesehen, welche quer zu der Mittellängsachse des Achsgehäuses angeordnet ist. Diese Querebene kann in einem beliebigen Winkel > 0° zur Mittellängsachse des Achsgehäuses angeordnet sein. Dabei ist in mindestens einer Lagerposition des Seitenstabilisators in Betriebseinbaulage eine Parallelität der Spannkraft und der Zugkraft bezüglich der Querebene gegeben.

Selbstverständlich ist es denkbar, dass der Seitenstabilisator in Betriebseinbaulage abhängig von der Ausgestaltung der Gelenkverbindung an der Lagerstelle und den daran angreifenden Kräften auch andere Lagerpositionen einnehmen kann, in denen die Spannkraft und die Zugkraft bezüglich der Querebene nicht parallel ausgerichtet sind.

Alternativ oder zusätzlich sind die Spannkraft und die Zugkraft in einer bevorzugten Ausführungsform bezüglich einer die Mittellängsachse des Achsgehäuses enthaltenden Achsenebene parallel ausgerichtet. Auch hier gilt, dass diese parallele Ausrichtung in mindestens einer spezifischen Lagerposition des Seitenstabilisators in Betriebseinbaulage der Lageranordnung gegeben ist, während der Seitenstabilisator in Betriebseinbaulage aufgrund der Gelenkverbindung an der Lagerstelle selbstverständlich auch andere Lagerpositionen einnehmen kann, in denen die Spannkraft und die Zugkraft bezüglich der Achsenebene nicht parallel ausgerichtet sind.

Üblicherweise ist das Achsgehäuse mit einer Tragstruktur (z.B. Chassis, Trägerrahmen) des Nutzfahrzeugs fest verbunden. Hierdurch ist die Lagerkonsole mit der Tragstruktur des Nutzfahrzeugs ebenfalls fest verbindbar. Dabei ist die mechanische Verbindung zwischen dem Achsgehäuse und der Lagerkonsole insbesondere lösbar ausgebildet. Hierdurch können einzelne Bestandteile der Lageranordnung montagefreundlich gewartet und erforderlichenfalls ausgetauscht werden.

In einer bevorzugten Ausführungsform ist die mechanische Verbindung oder die Spannkraft zwischen des Achsgehäuses und der Lagerkonsole mittels mindestens eines Spannbolzens (insbesondere Spannschraube) realisiert. Diese Spannmittel können als Standardbauteile kostengünstig bereitgestellt werden.

Für eine konstruktionstechnisch einfache mechanische Verbindung ist der mindestens eine Spannbolzen insbesondere mit einem Außengewinde ausgestattet, welches mit einem vom Achsgehäuse getragenen Innengewinde zusammenwirkt.

Im Falle mehrerer eingesetzter Spannbolzen sind diese in ihrem Montagezustand vorzugsweise mit Parallelabstand zueinander angeordnet. Dies unterstützt eine effiziente Spannkraft und mechanische Verbindung mit einem geringen Aufwand an geeigneten Verbindungs- bzw. Spannmitteln.

In einer weiteren bevorzugten Ausführungsform trägt das Achsgehäuse mindestens einen nach außen gerichteten Verbindungsausleger, um die Lagerkonsole montagetechnisch einfach und fehlerfrei an das Achsgehäuse bzw. dessen Verbindungsausleger anlegen und befestigen zu können. Mit dem mindestens einen Verbindungsausleger kann eine komfortable Montageebene für die Lagerkonsole bereitgestellt werden. Insbesondere bewirkt die Montageebene eine planparallele flächige Anlage zwischen dem oder den Verbindungsausleger(n) und der Lagerkonsole. Der oder die Verbindungsausleger ermöglichen eine konstruktionstechnisch einfache Adaptierung der Lagerkonsole an das Achsgehäuse, so dass die Herstellung der Lagerkonsole selbst nicht an spezifische Querschnittsverläufe des Achsgehäuses angepasst werden muss.

In einer weiteren Funktion ist der Verbindungsausleger selbst mit einem Innengewinde ausgestattet, welches mit einem Außengewinde eines vorgenannten Spannbolzens zusammenwirken kann. Hierdurch wird der Montageaufwand für die mechanische Verbindung zwischen dem Achsgehäuse und der Lagerkonsole gering gehalten.

In einer bevorzugten Ausführungsform ist der Gehäusemantel des Achsgehäuses zumindest abschnittsweise kegelstumpfartig ausgebildet mit einer Kegelstumpfachse, welche der Mittellängsachse entspricht. Das Achsgehäuse kann dann als ein Achstrichter bezeichnet werden. Daneben ist auch eine beliebige andere, dem jeweiligen Anwendungsfall entsprechende Formgebung denkbar.

Vorzugsweise ist zwischen dem Achsgehäuse und der Lagerkonsole zumindest abschnittsweise eine Formschlussverbindung ausgebildet. Beispielsweise kann bei einer Ausführungsform einer Formschlussverbindung ein Dorn oder Pin der Lagerkonsole in eine als Negativrelief ausgebildete Aussparung an dem Achsgehäuse eingreifen. Der Formschluss unterstützt eine montagefreundliche Handhabung der Lagerkonsole sowie auch eine Ausgestaltung der Lageranordnung als eine raumsparende kompakte Einheit.

Wie bereits erwähnt, ist die Lageranordnung vorzugsweise Bestandteil eines landwirtschaftlichen Nutzfahrzeugs, welches insbesondere als Traktor bzw. Schlepper ausgebildet ist. An der Lagerkonsole ist ein Seitenstabilisator gelagert, der einen an das Nutzfahrzeug gekoppelten Kraftheber stabilisiert. Der Kraftheber ist insbesondere als ein Dreipunkt-Kraftheber mit einem Oberlenker und zwei parallelen Unterlenkern ausgebildet. Mindestens einer der beiden Unterlenker ist mit einem Seitenstabilisator gelenkig verbunden.

Bezüglich einer Vertikalebene des Nutzfahrzeugs ist die Spannkraft vorzugsweise lotrecht, also horizontal ausgerichtet. In einer gedachten Horizontalebene des Nutzfahrzeugs schließt die Spannkraft mit einer Fahrzeug-Längsrichtung vorzugsweise einen spitzen Winkel ein. Dieser Winkel ist insbesondere an eine Ausrichtung des Seitenstabilisators relativ zur Fahrzeug-Längsrichtung angepasst.

Die erfindungsgemäße Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Seitenansicht der Lageranordnung in einem auseinandergebauten Zustand,
- Fig. 2: eine perspektivische Darstellung der Lageranordnung gemäß Fig. 1,
- Fig. 3: die Lageranordnung gemäß Fig. 1 in einem zusammengebauten Zustand, und
- Fig. 4: eine Draufsicht der Lageranordnung entsprechend der Pfeilrichtung IV in Fig. 3.

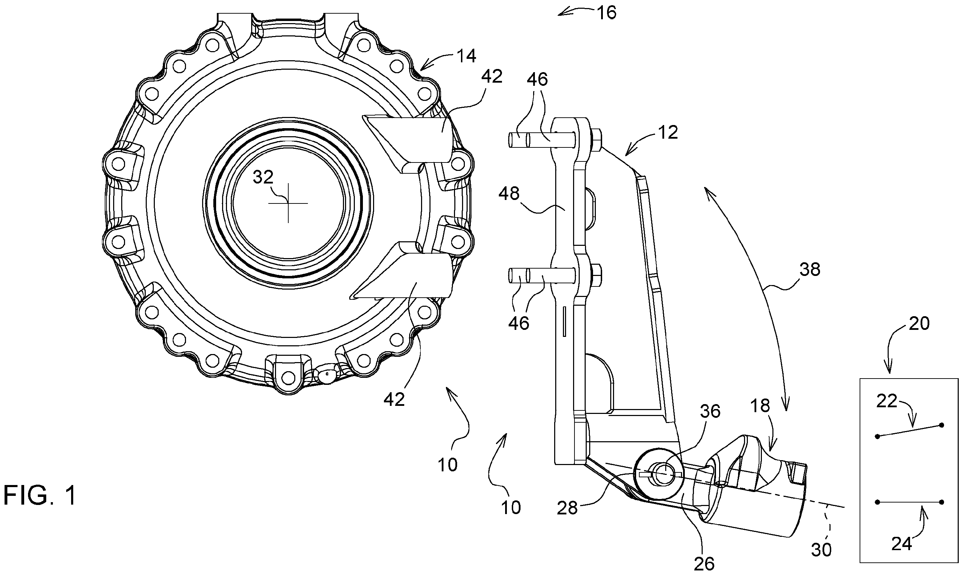

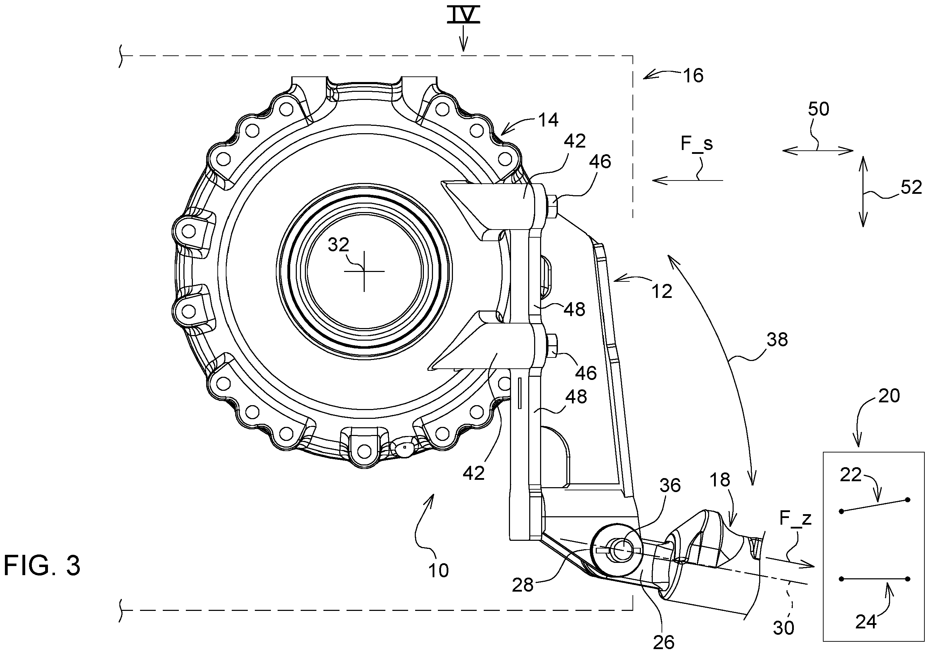

Fig. 1 zeigt eine Lageranordnung 10 mit einer Lagerkonsole 12 und einem Achsgehäuse 14 in einem auseinandergebauten Zustand. In einer Betriebseinbaulage hingegen sind beide Bestandteile 12, 14 miteinander fest verbunden (Fig. 3) und wieder voneinander lösbar. Da in Betriebseinbaulage das Achsgehäuse 14 mit einer Tragstruktur eines hier lediglich schematisch angedeuteten landwirtschaftlichen Nutzfahrzeugs 16 fest verbunden ist, ist auch die Lagerkonsole 12 bezüglich der Tragstruktur fest und unbeweglich angeordnet.

Die Lagerkonsole 12 dient zur Lagerung eines hier nur abschnittsweise dargestellten Seitenstabilisators 18, der in Betriebseinbaulage der Lageranordnung 10 eine mechanische Kopplung der Lagerkonsole 12 mit einem Heck-Kraftheber 20 bewirkt. Der Heck-Kraftheber 20 ist lediglich schematisch angedeutet und ist insbesondere als ein Dreipunkt-Kraftheber ausgebildet. Er enthält dann in üblicher Weise einen Oberlenker 22 und zwei Unterlenker 24.

Mit seinem in Fig. 1 erkennbaren Freiende 26 ist der Seitenstabilisator 18 an einer Lagerstelle 28 der Lagerkonsole 12 beweglich angelenkt. Das dem Freiende 26 entlang der Stabilisator-Längsachse 30 gegenüberliegende und hie nicht erkennbare Freiende des Seitenstabilisators 18 ist beweglich an einen der beiden Unterlenker 24 angelenkt. Je nach Ausführungsform des Nutzfahrzeugs 16 und/oder des Heck-Krafthebers 20 trägt das Nutzahrzeug 16 entweder eine Lagerkonsole 12 für die mechanische Kopplung mit einem Unterlenker 24 oder zwei Lagerkonsolen 18 für eine mechanische Kopplung mit beiden Unterlenkern 24.

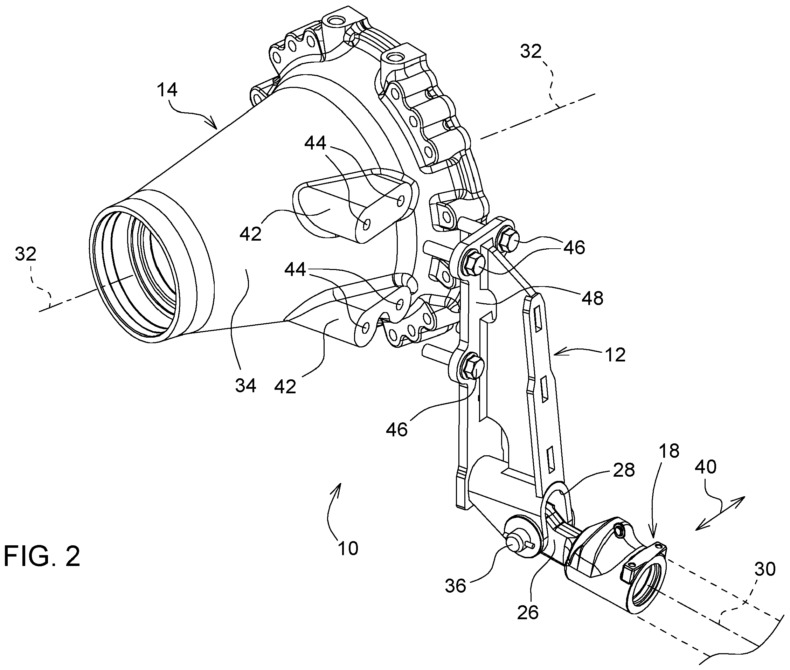

Das Achsgehäuse 14 umgibt etwa konzentrisch eine Hinterachse des Nutzfahrzeugs 16, welche durch eine Mittellängsachse 32 des Achsgehäuses 14 repräsentiert ist. In Fig. 2 ist erkennbar, dass das auch als Achstrichter bezeichnete Achsgehäuse 14 einen kegelstumpfartig ausgebildeten Gehäusemantel 34 aufweist.

Weiterhin ist Fig. 2 entnehmbar, dass die Lagerstelle 28 U-förmig ausgebildet ist mit zwei U-Schenkeln, zwischen denen das Freiende 26 beweglich gelagert ist. Hierzu sind die beiden U-Schenkel von einem Lagerbolzen 36 durchsetzt. Folglich ist der Seitenstabilisator 18 entlang einer Schwenkrichtung 38 schwenkbeweglich. Die Lagerstelle 28 und/oder das Freiende 26 ist vorzugsweise derart ausgebildet (z.B. mittels eines kugelgelenkartigen Lagers), dass der Seitenstabilisator 18 zusätzlich eine laterale Bewegung etwa entlang einer Lateralrichtung 40 durchführen kann.

Das Achsgehäuse 14 trägt in einem der Lagerkonsole 12 zugewandten Bereich zwei voneinander beabstandete domartige Verbindungsausleger 42. Diese sind ausgehend von dem Gehäusemantel 34 nach außen gerichtet und enthalten jeweils zwei Innengewinde 44. Jedes Innengewinde 44 wirkt für den Zusammenbau der Lageranordnung 10 mit einem Spannbolzen 46 zusammen, welcher ein entsprechendes Außengewinde aufweist.

Beispielsgemäß durchsetzen insgesamt vier parallel zueinander angeordnete Spannbolzen 46 eine plattenartige Konsolenbasis 48, welche zur Montage der Lagerkonsole 12 an die Verbindungsausleger 42 angelegt wird. Die Verbindungsausleger 42 sind derart dimensioniert, dass sie eine handhabungsfreundliche Montageebene für die Lagerkonsole 12 bilden. In einer alternativen, hier nicht dargestellten Ausführungsform können die Konsolenbasis 48 derart ausgestaltet und die Verbindungsausleger 42 derart angepasst und positioniert sein, dass zwischen dem Gehäusemantel 34 und der Konsolenbasis 48 bei Zusammenbau zumindest abschnittsweise eine Formschlussverbindung entsteht. Beispielsweise wird dies realisiert, indem die Konsolenbasis 48 bogenförmig verläuft und als Negativrelief an dem Gehäusemantel 34 anliegt. Bei einer weiteren Ausführungsform einer Formschlussverbindung kann ein Dorn oder Pin der Lagerkonsole 12 in eine als Negativrelief ausgebildete Aussparung an dem Achsgehäuse 14 eingreifen.

In Fig. 3 befindet sich die Lageranordnung 10 in ihrer Betriebseinbaulage am Nutzfahrzeug 16. Hierbei ist die Lagerkonsole 12 mit dem Achsgehäuse 14 durch eine mittels der Spannbolzen 46 erzeugte Spannkraft F_s fest verbunden. Zur Lösung der festen Verbindung werden die Spannbolzen 46 wieder von den Verbindungsauslegern 42 entfernt.

In der Ansicht gemäß Fig. 3 liegt die Spannkraft F_s etwa in einer horizontalen Ebene ein, welche parallel zu einer durch die Mittellängsachse 32 und durch eine horizontale Fahrzeug-Längsrichtung 50 aufgespannten Achsenebene angeordnet ist. An der Lagerstelle 28 greift eine durch den Seitenstabilisator 18 und den Heck-Kraftheber 20 induzierte Zugkraft F_z an. Aufgrund der spezifischen Lagerposition des Seitenstabilisators 18 in Fig. 3 schließt dort die Zugkraft F_z mit der Spannkraft F_s einen spitzen Winkel ein.

Der Seitenstabilisator 18 ist entlang der Schwenkrichtung 38 schwenkbar und kann deshalb entlang einer vertikalen Fahrzeug-Höhenrichtung 52 unterschiedliche Lagerpositionen einnehmen. In einer spezifischen, hier nicht dargestellten Lagerposition verläuft die Stabilisator-Längsachse 30 in der Ansicht gemäß Fig. 3 parallel zur Spannkraft F_s. In dieser Lagerposition wären die Spannkraft F_s und die Zugkraft F_z parallel zu der vorgenannten, die Mittellängsachse 32 enthaltende Achsenebene ausgerichtet.

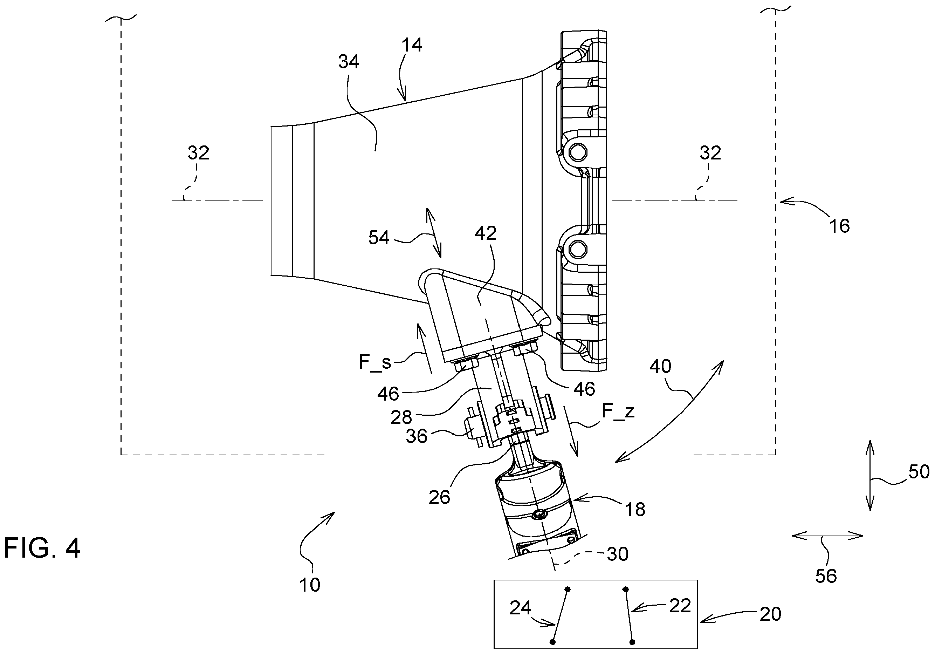

In Fig. 4 ist erkennbar, dass die Spannkraft F_s in einer Querebene einliegt, welche durch die Fahrzeug-Hochrichtung 52 und durch eine in Richtung der Spannkraft F_s verlaufende Spannkraft-Richtung 54 aufgespannt ist. Diese Querebene ist also quer, jedoch nicht lotrecht zu der Mittellängsachse 32 angeordnet. Entsprechend liegt die Spannkraft F_s zwar etwa in einer durch die Fahrzeug-Längsrichtung 50 und durch eine Fahrzeug-Querrichtung 56 aufgespannten Ebene ein, verläuft jedoch nicht parallel zu der Fahrzeug-Längsrichtung 50.

Sofern der Seitenstabilisator 18 nicht lateral entlang der Lateralrichtung 40 ausgeschwenkt wird oder ausgeschwenkt werden kann, sind die Spannkraft F_s und die Zugkraft F_z parallel zu der vorgenannten Querebene ausgerichtet.

Es sei darauf hingewiesen, dass einzelne Details in den Zeichnungen nicht notwendigerweise maßstäblich dargestellt sind.

## Patentansprüche

1. Anordnung (10) mit einer Lagerkonsole (12) zur Lagerung eines Seitenstabilisators (18), welcher in Betriebseinbaulage eine mechanische Kopplung der Lagerkonsole (12) mit einem Heck-Kraftheber (20) bewirkt, und mit einem eine Mittellängsachse (32) aufweisenden Achsgehäuse (14) für eine Hinterachse (32) eines landwirtschaftlichen Nutzfahrzeugs (16), wobei die Lagerkonsole (12) eine Lagerstelle (28) zur beweglichen Lagerung des Seitenstabilisators (18) aufweist, **dadurch gekennzeichnet, dass** die Lagerkonsole (12) mit dem Achsgehäuse (14) mittels Spannmitteln (46) durch eine Spannkraft (F_s) verbunden ist, die parallel zu einer an der Lagerstelle (28) in Betriebseinbaulage wirkenden Zugkraft (F_z) ausgerichtet ist.

2. Lageranordnung nach Anspruch 1, **dadurch gekennzeichnet, dass** die Spannkraft (F_s) und die Zugkraft (F_z) parallel ausgerichtet sind bezüglich einer Ebene (52, 54), welche quer zur Mittellängsachse (32) des Achsgehäuses (14) angeordnet ist, und/oder einer Ebene (32, 50), welche die Mittellängsachse (32) des Achsgehäuses (14) enthält.

3. Lageranordnung nach Anspruch 1 oder 2, **dadurch gekennzeichnet, dass** die Verbindung zwischen der Lagerkonsole (12) und dem Achsgehäuse (14) lösbar ausgebildet ist.

4. Lageranordnung nach wenigstens einem der vorhergehenden Ansprüche, **gekennzeichnet durch** einen oder mehrere Spannbolzen (46) zur Verbindung des Achsgehäuses (14) mit der Lagerkonsole (12).

5. Lageranordnung nach Anspruch 4, **dadurch gekennzeichnet, dass** mehrere Spannbolzen (46) mit Parallelabstand zueinander angeordnet sind.

6. Lageranordnung nach wenigstens einem der vorhergehenden Ansprüche, **dadurch gekennzeichnet, dass** das Achsgehäuse (14) mindestens einen nach außen gerichteten Verbindungsausleger (42) trägt zur Anlage der Lagerkonsole (12) .

7. Lageranordnung nach Anspruch 6, **dadurch gekennzeichnet, dass** der Verbindungsausleger (42) mindestens ein Innengewinde (44) für einen Spannbolzen (46) aufweist.

8. Lageranordnung nach wenigstens einem der vorhergehenden Ansprüche, **dadurch gekennzeichnet, dass** das Achsgehäuse (14) einen zumindest abschnittsweise kegelstumpfartig ausgebildeten Gehäusemantel (34) aufweist, dessen Kegelstumpfachse der Mittellängsachse (32) entspricht.

9. Lageranordnung nach wenigstens einem der vorhergehenden Ansprüche, **dadurch gekennzeichnet, dass** zwischen dem Achsgehäuse (14) und der Lagerkonsole (12) zumindest abschnittsweise eine Formschlussverbindung ausgebildet ist.

10. Landwirtschaftliches Nutzfahrzeug (16) mit einer Lageranordnung (10) nach wenigstens einem der vorhergehenden Ansprüche.

## Claims

1. Arrangement (10) having a bearing bracket (12) for mounting of a side stabilizer (18) which, in the operational installation position, brings about a mechanical coupling of the bearing bracket (12) to a rear power lift (20), and having an axle housing (14) for a rear axle (32) of an agricultural utility vehicle (16), which axle housing has a central longitudinal axis (32), wherein the bearing bracket (12) has a bearing point (28) for movable mounting of the side stabilizer (18), **characterized in that**, by means of clamping means (46), the bearing bracket (12) is connected to the axle housing (14) by way of a clamping force (F_s), which clamping force is oriented parallel to a pulling force (F_z) acting at the bearing point (28) in the operational installation position.

2. Bearing arrangement according to Claim 1, **characterized in that** the clamping force (F_s) and the pulling force (F_z) are oriented in a parallel manner in relation to a plane (52, 54) which is arranged transversely to the central longitudinal axis (32) of the axle housing (14), and/or a plane (32, 50) which contains the central longitudinal axis (32) of the axle housing (14).

3. Bearing arrangement according to Claim 1 or 2, **characterized in that** the connection between the bearing bracket (12) and the axle housing (14) is of releasable form.

4. Bearing arrangement according to at least one of the preceding claims, **characterized by** one or more clamping bolts (46) for connecting the axle housing (14) to the bearing bracket (12).

5. Bearing arrangement according to Claim 4, **characterized in that** multiple clamping bolts (46) are arranged parallel and with a spacing to one another.

6. Bearing arrangement according to at least one of the preceding claims, **characterized in that** the axle housing (14) bears at least one outwardly directed connecting extension (42) for abutment against the bearing bracket (12) .

7. Bearing arrangement according to Claim 6, **characterized in that** the connecting extension (42) has at least one inner thread (44) for a clamping bolt (46).

8. Bearing arrangement according to at least one of the preceding claims, **characterized in that** the axle housing (14) has an at least sectionally frustoconical housing lateral surface (34), the truncated-cone axis of which corresponds to the central longitudinal axis (32).

9. Bearing arrangement according to at least one of the preceding claims, **characterized in that** a form-fit connection is formed at least sectionally between the axle housing (14) and the bearing bracket (12).

10. Agricultural utility vehicle (16) having a bearing arrangement (10) according to at least one of the preceding claims.

## Revendications

1. Agencement (10) comprenant une console de palier (12) pour le support d'un stabilisateur latéral (18) qui, en position de montage de fonctionnement, provoque un couplage mécanique de la console de palier (12) avec un dispositif de levage arrière (20), et comprenant un carter d'essieu (14) présentant un axe longitudinal médian (32) pour un essieu arrière (32) d'un véhicule utilitaire agricole (16), la console de palier (12) présentant un point d'appui (28) pour le support mobile du stabilisateur latéral (18), **caractérisé en ce que** la console de palier (12) est reliée au carter d'essieu (14) à l'aide de moyens de serrage (46) par une force de serrage (F_s) qui est dirigée parallèlement à une force de traction (F_z) agissant sur le point d'appui (28) dans la position de montage de fonctionnement.

2. Agencement de palier selon la revendication 1, **caractérisé en ce que** la force de serrage (F_s) et la force de traction (F_z) sont dirigées parallèlement par rapport à un plan (52, 54) qui est agencé transversalement à l'axe longitudinal médian (32) du carter d'essieu (14) et/ou à un plan (32, 50) qui contient l'axe longitudinal médian (32) du carter d'essieu (14).

3. Agencement de palier selon la revendication 1 ou 2, **caractérisé en ce que** la liaison entre la console de palier (12) et le carter d'essieu (14) est réalisée sous forme amovible.

4. Agencement de palier selon au moins l'une quelconque des revendications précédentes, **caractérisé par** un ou plusieurs boulons de serrage (46) pour relier le carter d'essieu (14) à la console de palier (12).

5. Agencement de palier selon la revendication 4, **caractérisé en ce que** plusieurs boulons de serrage (46) sont agencés à une distance parallèle les uns des autres.

6. Agencement de palier selon au moins l'une quelconque des revendications précédentes, **caractérisé en ce que** le carter d'essieu (14) porte au moins un bras de liaison (42) dirigé vers l'extérieur pour l'application de la console de palier (12).

7. Agencement de palier selon la revendication 6, **caractérisé en ce que** le bras de liaison (42) présente au moins un filetage intérieur (44) pour un boulon de serrage (46) .

8. Agencement de palier selon au moins l'une quelconque des revendications précédentes, **caractérisé en ce que** le carter d'essieu (14) présente une enveloppe de carter (34) réalisée sous forme tronconique au moins par sections, dont l'axe tronconique correspond à l'axe longitudinal médian (32) .

9. Agencement de palier selon au moins l'une quelconque des revendications précédentes, **caractérisé en ce qu'**une liaison par complémentarité de forme est réalisée au moins par sections entre le carter d'essieu (14) et la console de palier (12).

10. Véhicule utilitaire agricole (16) comprenant un agencement de palier (10) selon au moins l'une quelconque des revendications précédentes.
